# EUROPÄISCHE PATENTSCHRIFT

(11) **EP 0 802 532 B1**
(45) Veröffentlichungstag und Bekanntmachung des Hinweises auf die Patenterteilung: **28.11.2001**
(21) Anmeldenummer: 97200667.0
(22) Anmeldetag: 06.03.1997
(51) Int. Cl.: G11B 15/675

(54) **Band-Kassetten Lademechanismus**
Tape-cassette loading mechanism
Mécanisme de chargement de cassette à bande

(30) Priorität: 13.03.1996 DE 19609790
(43) Veröffentlichungstag der Anmeldung: 22.10.1997
(73) Patentinhaber: Philips Corporate Intellectual Property GmbH, 52064 Aachen (DE); Koninklijke Philips Electronics N.V., 5621 BA Eindhoven (NL)
(72) Erfinder: Kunze, Norbert, Röntgenstrasse 24, 22335 Hamburg (DE); Koch, Stefan, Röntgenstrasse 24, 22335 Hamburg (DE)
(74) Vertreter: von Laue, Hanns-Ulrich, Dipl.-Ing.

(56) Entgegenhaltungen:
- EP-A- 0 587 226
- DE-A- 3 832 672
- DE-A- 3 914 789
- US-A- 5 136 443

## Beschreibung

Die Erfindung betrifft einen Lademechanismus an einem Laufwerk für ein Magnetbandkassettengerät zum Überführen einer Magnetbandkassette von einer Auswurfposition des Lademechanismus in eine Spielposition des Lademechanismus mit einem die Magnetbandkassette aufnehmenden Kassettenschacht und einer Liftplatte, mittels derer der Kassettenschacht zwischen einer Zwischenposition des Lademechanismus und der Spielposition des Lademechanismus im wesentlichen in einer vertikalen Laderichtung transportierbar ist, wobei die Liftplatte und der Kassettenschacht in einer horizontalen Laderichtung von der Auswurfposition in die Zwischenposition transportierbar sind.

Ein derartiger Lademechanismus ist aus der DE 32 41 361 C2 bekannt. Dieser bekannte Lademechanismus weist einen Kassettenschacht auf, an dem auf jeder Seite wenigstens zwei Zapfen angeordnet sind. Diese Zapfen greifen sowohl in Führungsschlitze eines Rahmens als auch in Führungsschlitze von wenigstens zwei beweglichen Liftplatten ein. Die beiden Liftplatten sind gleichsinnig translatorisch bewegbar miteinander gekoppelt. Zum Überführen des Kassettenschachtes von der Zwischenstellung in die Spielstellung werden die beiden Liftplatten in der horizontalen Laderichtung mittels eines Antriebsmechanismus bewegt und üben dabei auf die an dem Kassettenschacht angeordneten Zapfen eine Kraft in der vertikalen Laderichtung aus. Bei einem derartigen Lademechanismus muß die ganze für das Überführen der Magnetbandkassette von der Spielposition in die Zwischenposition erforderliche Kraft in der vertikalen Laderichtung von den beiden Liftplatten aufgebracht werden. Erfolgt der Antrieb der beiden Liftplatten mittels Zahnrädern und Zahnstangen aus Kunststoff, so wird die mittels eines solchen Antriebsmechanismus aufbringbare Kraft durch die Festigkeit des Kunststoffs begrenzt.

Insbesondere bei schweren Magnetbandkassetten kann dies zu Problemen Führen. Zudem muß jede der beiden Liftplatten mit einer Zahnstange versehen sein, welche jeweils mit einem Zahnrad kämmt. Die beiden Zahnräder müssen z.B. mittels einer gemeinsamen Spindel translatorisch gekoppelt werden. Daraus resultiert ein großer Teileaufwand. Die Spindel, mittels derer die beiden Zahnräder translatorisch gekoppelt werden, schränkt den Bauraum des Lademechanismus ein.

Es ist Aufgabe der Erfindung, einen Lademechanismus der eingangs genannten Art zu schaffen, der einfach und zuverlässig ist und bei dem die von dem Mechanismus zum Überführen der Magnetbandkassette von der Spielposition in die Zwischenposition aufzubringenden Kräfte möglichst gering sind.

Diese Aufgabe ist erfindungsgemäß dadurch gelöst, daß ein Liftelement vorgesehen ist, das drehbar und in der horizontalen Laderichtung verschiebbar an einem an einer Chassisplatte angeordneten Rahmen gelagert ist,
daß das Liftelement an wenigstens einem Kopplungspunkt drehbar mit dem Kassettenschacht gekoppelt ist,
daß der Kassettenschacht, das Liftelement und eine Liftplatte in der horizontalen Laderichtung von der Zwischenposition in die Auswurfposition und umgekehrt transportierbar sind,
daß beim Übergang des Lademechanismus von der Zwischenposition in die Spielposition und von der Spielposition in die Zwischenposition die Liftplatte in der horizontalen Laderichtung bewegt wird und dabei eine Kraft auf den Kassettenschacht und das Liftelement ausübt, so daß dieser im wesentlichen in der vertikalen Laderichtung von der Zwischenposition in die Spielposition bzw. von der Spielposition in die Zwischenposition überführt wird, wobei bei diesem Überführen das Liftelement eine Drehbewegung ausführt.

In der Spielstellung des Lademechanismus greifen z.B. die Wickelteller des Magnetbandkassettengerätes in die Wickelöffnungen der Magnetbandkassette ein, und das Magnetband kann an einem Magnetkopf vorbeigeführt werden. Soll die Magnetbandkassette von dieser Spielposition in eine Auswurfposition überführt werden, in der eine Bedienperson die Magnetbandkassette von Hand entnehmen kann, wird die Magnetbandkassette zunächst von der Spielposition in die Zwischenposition in der vertikalen Laderichtung angehoben. Die zum Anheben der Magnetbandkassette erforderliche Hebekraft wird von der Liftplatte aufgebracht, welche sich in der horizontalen Laderichtung bewegt und dabei sowohl eine Kraft auf den Kassettenschacht als auch auf das Liftelement ausübt. Die auf das Liftelement ausgeübte Kraft wird an dem Kopplungspunkt von Liftelement und Kassettenschacht auf den Kassettenschacht übertragen. Bei dem Überführen des Lademechanismus von der Spielposition in die Zwischenposition führt das drehbar an dem Rahmen gelagerte Liftelement eine Drehbewegung aus, stützt sich dabei in der vertikalen Laderichtung an dem Rahmen ab und kann dadurch einen Teil der Schwerkraft der Magnetbandkassette in der vertikalen Laderichtung aufnehmen. Dadurch wird die Kraft, die die Liftplatte bei dem Überführen des Lademechanismus von der Spielstellung in die Zwischenstellung aufbringen muß, reduziert. Es ist möglich, daß das Liftelement bei dieser Drehbewegung auch eine geringe Bewegung in der horizontalen Laderichtung ausführt.

Dadurch, daß nur eine Liftplatte erforderlich ist, werden Teile eingespart, md es kann auf die aufwendige translatorische Kopplung der beiden Liftplatten mittels einer gemeinsamen Spindel verzichtet werden. Dadurch, daß nur eine Liftplatte erforderlich ist, wird auf einer Seite des Kassettenschachtes Bauraum eingespart, der insbesondere auf der Seite des Kassettenschachtes begrenzt ist, auf der der Magnetkopf des Magnetbandkassettengerätes in die Magnetbandkassette eingetaucht wird.

Eine vorteilhafte Ausgestaltung der Erfindung ist dadurch gekennzeichnet, daß das Liftelement einen ersten und einen zweiten Zapfen aufweist, der jeweils in einem ersten bzw. zweiten sich in der horizontalen Laderichtung erstreckenden Führungsschlitz des Rahmens geführt wird.

Der erste horizontale Führungsschlitz ist auf der einen Seite des Rahmens angeordnet und der zweite Führungsschlitz gegenüberliegend auf der anderen Seite des Rahmens. Mit einer derartigen Anordnung läßt sich eine drehbare Kopplung des Liftelementes mit dem Kassettenschacht, welche gleichzeitig eine horizontale Bewegung des Liftelementes gegenüber dem Kassettenschacht ermöglicht, einfach realisieren.

Eine weitere vorteilhafte Ausgestaltung der Erfindung ist dadurch gekennzeichnet, daß das Liftelement einen dritten Zapfen aufweist, der in einem dritten Führungsschlitz des Rahmens geführt wird, wobei der dritte Führungsschlitz im wesentlichen L-förmig ausgebildet ist und einen sich in der horizontalen Laderichtung erstreckenden horizontalen Teil und einen sich im wesentlichen in der vertikalen Laderichtung erstreckenden vertikalen Teil aufweist, wobei der vertikale Teil kurvenförmig ausgebildet ist.

Wird der Lademechanismus von der Auswurfposition in die Zwischenposition transportiert, so wird der dritte Zapfen des Liftelementes in dem horizontalen Teil des dritten Führungsschlitzes des Rahmens geführt. Wird der Lademechanismus von der Zwischenposition in die Spielposition überführt, so wird der dritte Zapfen des Liftelementes in dem sich im wesentlichen in der vertikalen Laderichtung erstreckenden vertikalen Teil des dritten Führungsschlitzes des Rahmens geführt. Da bei diesem Überführen des Lademechanismus von der Zwischenposition in die Spielposition das Liftelement eine Drehbewegung um die Drehachse ausführt, ist der vertikale Teil des dritten Führungsschlitzes kurvenförmig ausgebildet, so daß auch der dritte Zapfen des Liftelementes eine Drehbewegung ausführen kann.

Eine weitere vorteilhafte Ausgestaltung der Erfindung ist dadurch gekennzeichnet, daß der Kassettenschacht einen ersten Zapfen aufweist, der in einem vierten Führungsschlitz des Rahmens geführt wird, wobei der vierte Führungsschlitz im wesentlichen L-förmig ausgebildet ist und einen sich in der horizontalen Laderichtung erstreckenden horizontalen Teil und einen sich in der vertikalen Laderichtung erstreckenden vertikalen Teil aufweist.

Wird der Kassettenschacht von der Auswurfstellung in die Zwischenstellung transportiert, so wird der erste Zapfen des Kassettenschachtes in dem horizontalen Teil des vierten Führungsschlitzes des Rahmens geführt. Wird der Kassettenschacht von der Zwischenposition in die Spielposition überführt, so wird der erste Zapfen des Kassettenschachtes in dem vertikalen Teil des vierten Führungsschlitzes des Rahmens geführt. Dadurch wird gewährleistet, daß der Kassettenschacht und damit die Magnetbandkassette in der vertikalen Laderichtung von der Zwischenposition in die Spielposition abgesenkt werden und dadurch die Wickelöffnungen der Magnetbandkassette in der vertikalen Laderichtung auf die Wickelteller des Magnetbandkassettengerätes abgesenkt werden.

Eine weitere vorteilhafte Ausgestaltung der Erfindung ist dadurch gekennzeichnet, daß die Liftplatte einen ersten und einen zweiten geneigt verlaufenden Schlitz aufweist, wobei der erste Zapfen des Kassettenschachtes in den ersten Schlitz und der dritte Zapfen des Liftelementes in den zweiten Schlitz eingreift.

Wird die Liftplatte von der Auswurfposition in die Zwischenposition überführt, so üben die Randbereiche des ersten und des zweiten Schlitzes der Liftplatte auf den ersten Zapfen des Kassettenschachtes bzw. den dritten Zapfen des Liftelementes eine Kraft in der horizontalen Laderichtung aus, infolge derer das Liftelement und der Kassettenschacht in der horizontalen Laderichtung von der Auswurfposition in die Zwischenposition transportiert werden. Dabei verhindert die gleichzeitige Führung des ersten Zapfens des Kassettenschachtes in dem horizontalen Teil des vierten Führungsschlitzes des Rahmens und des dritten Zapfens des Liftelementes in dem horizontalen Teil des dritten Führungsschlitzes des Rahmens ein Hinabgleiten des ersten Zapfens des Kassettenschachtes bzw. des dritten Zapfens des Liftelementes in dem ersten bzw. zweiten Schlitz der Liftplatte. Wird die Liftplatte in der horizontalen Laderichtung von der Zwischenposition in die Spielposition überführt, so üben die Randbereiche des ersten bzw. zweiten Schlitzes der Liftplatte eine Kraft in der vertikalen Laderichtung aus, den ersten Zapfen des Kassettenschachtes bzw. den dritten Zapfen des Liftelementes aus, wodurch das Liftelement und der Kassettenschacht von der Zwischenposition in die Spielposition überführt werden. Dabei gleiten der erste Zapfen des Kassettenschachtes bzw. der dritte Zapfen des Liftelementes in den geneigt verlaufenden Schlitzen der Liftplatte hinunter. Gleichzeitig wird der erste Zapfen des Kassettenschachtes in dem vertikalen Teil des vierten Führungsschlitzes des Rahmens und der dritte Zapfen des Liftelementes in dem kurvenförmig ausgebildeten vertikalen Teil des dritten Führungsschlitzes geführt.

Eine weitere vorteilhafte Ausgestaltung der Erfindung ist dadurch gekennzeichnet, daß der Rahmen eine sich in der horizontalen Laderichtung erstreckende Auflagefläche aufweist, auf der ein Ansatz des Kassettenschachtes führbar ist.

Eine solche horizontale Auflagefläche bewirkt eine bessere Führung des Kassettenschachtes beim Übergang zwischen der Auswurfstellung und der Zwischenstellung.

Eine weitere vorteilhafte Ausgestaltung der Erfindung ist dadurch gekennzeichnet,
daß der zweite Schlitz der Liftplatte kurvenförmig ausgebildet ist, wobei
der Winkel zwischen der Tangente an diesen kurvenförmig ausgebildeten zweiten Schlitz und der vertikalen Laderichtung in Richtung auf die Oberkante der Liftplatte zunimmt.

Die Kraft, die die Liftplatte beim Anheben der Magnetbandkassette von der Spielposition in die Zwischenposition aufbringen muß, nimmt in Richtung auf die Zwischenposition kontinuierlich zu. Dies liegt in der drehbaren Lagerung des Liftelementes an dem Rahmen begründet. Je größer der Winkel zwischen der horizontalen Laderichtung und dem Liftelement ist, desto größer wird der Teil der Gesamtschwerkraft der Kassette, den das Liftelement unter Abstützung an dem Rahmen aufbringen kann. Durch die kurvenförmige Ausbildung des zweiten Schlitzes wird diesem Effekt entgegengewirkt. Mit steigendem Winkel zwischen der Tangente an den kurvenförmig ausgebildeten zweiten Schlitz und der vertikalen Laderichtung steigt der Anteil der Kraft, der durch die horizontale Bewegung der Liftplatte in vertikaler Richtung auf den dritten Zapfen des Liftelementes ausgeübt wird. Dadurch wird erreicht, daß die Kraft, die für den Antrieb der Liftplatte in horizontaler Richtung aufgebracht werden muß, beim Übergang zwischen Zwischen- und Spielposition konstant ist.

Eine weitere vorteilhafte Ausgestaltung der Erfindung ist dadurch gekennzeichnet, daß der erste Schlitz der Liftplatte kurvenförmig ausgebildet ist, wobei der Winkel zwischen der Tangente an diesen kurvenförmig ausgebildeten ersten Schlitz und der vertikalen Laderichtung in Richtung auf die Oberkante der Liftplatte zunimmt.

Ist der zweite Schlitz der Liftplatte kurvenförmig ausgebildet und der erste Schlitz geradlinig, so kann dies beim Überführen der Magnetbandkassette von der Spiel- in die Zwischenposition zu einem leichten Verkippen der Magnetbandkassette gegenüber der horizontalen Laderichtung führen. Um dies zu verhindern, ist der erste Schlitz der Liftplatte ebenfalls kurvenförmig ausgebildet. Der erste Schlitz der Liftplatte, der den ersten Zapfen des Kassettenschachtes führt, liegt in der Regel näher am Drehpunkt des Liftelementes. Um die Magnetbandkassette beim Anheben bzw. Absenker genau horizontal zu halten, müssen die Krümmung des kurvenförmig ausgebildeten ersten Schlitzes und die Krümmung des zweiten kurvenförmig ausgebildeten Schlitzes aufeinander abgestimmt sein.

Eine weitere vorteilhafte Ausgestaltung der Erfindung ist dadurch gekennzeichnet, daß das Liftelement und die Liftplatte mittels einer Feder gegeneinander verspannt sind.

Ist das Magnetbandkassettengerät nicht eingeschaltet, so ist es, um eine Beschädigung des Magnetbandkassettengerätes zu vermeiden, nicht erwünscht, daß die Magnetbandkassette über die Auswurfposition hinaus in das Gerät eingebracht werden kann. Bei nicht eingeschaltetem Magnetbandkassettengerät ist die Liftplatte blockiert. Befindet sich im ausgeschalteten Zustand des Magnetbandkassettengerätes eine Kassette in dem Kassettenschacht und wird die Kassette und damit der Kassettenschacht und das Liftelement über die Auswurfstellung hinaus von der Hand der Bedienperson in das Gerät eingedrückt, so spannt sich die Feder zwischen Liftelement und Liftplatte und bewegt das Liftelement, den Kassettenschacht und die Magnetbandkassette wieder in die Auswurfposition zurück, sobald die Bedienperson die Kassette losläßt.

Eine weitere vorteilhafte Ausgestaltung der Erfindung ist dadurch gekennzeichnet, daß das Liftelement an wenigstens zwei Kopplungspunkten drehbar mit dem Kassettenschacht gekoppelt ist.

Mit zwei Kopplungspunkten ist eine größere Stabilität der drehbaren Kopplung zwischen Liftelement und Kassettenschacht gewährleistet.

Ein derartiger Lademechanismus weist eine höhere Stabilität auf und ermöglicht eine noch bessere Führung von Liftelement und Kassettenschacht. Dies ist insbesondere dann vorteilhaft, wenn der Lademechanismus nicht für ein Magnetbandkassettengerät, sondern für eine Compact-Disc oder CD-ROM oder andere Datenträger mit größerer Breite als eine Magnetbandkassette verwendet wird.

Der erfindungsgemäße Lademechanismus kann vorzugsweise in einem Laufwerk, in einem Magnetbandkassettengerät mit einem Laufwerk, in einem digitalen Magnetbandkassettengerät mit einem Laufwerk oder in einem Gerät zum Lesen von digital auf Platten oder anderen Informationsträgern gespeicherten Informationen verwendet werden.

Eine Ausführungsform der Erfindung wird nachfolgend anhand der Zeichnung in den Fig. 1 bis 10 näher erläutert. Es zeigen:
Fig. 1 in perspektivischer Ansicht einen Lademechanismus in einer Auswurfposition, in der die Kassette von der Hand einer Bedienperson entnommen werden kann, mit einem Rahmen, einer größtenteils von dem Rahmen verdeckten Liftplatte, einem Kassettenschacht und einem Liftelement,
Fig. 2 den Lademechanismus in der Auswurfposition gemäß Fig. 1, wobei eine Seitenwand und die Rückwand des Rahmens nicht dargestellt sind, um die Ausbildung und Wirkung der Liftplatte zu erläutern,
Fig. 3 eine perspektivische Ansicht auf den Lademechanismus gemäß Fig. 1 in einer Zwischenposition, in der das Liftelement, der Kassettenschacht und die Liftplatte gegenüber der Auswurfposition in einer horizontalen Laderichtung bewegt worden sind,
Fig. 4 den Lademechanismus gemäß Fig. 3 in der Zwischenposition, wobei eine Seitenwand und die Rückwand des Rahmens nicht dargestellt sind, um die Ausbildung und Wirkung der Liftplatte zu verdeutlichen,
Fig. 5 den Lademechanismus gemäß Fig. 1 in einer Spielposition, in der gegenüber der Zwischenposition die Liftplatte in der horizontalen Laderichtung verfahren wurde, das Liftelement eine Drehung um eine Drehachse ausgeführt hat und der Kassettenschacht mit der Magnetbandkassette in einer vertikalen Laderichtung auf nicht dargestellte Wickelteller des Magnetbandkassettengerätes abgesenkt wurde,
Fig. 6 den Lademechanismus gemäß Fig. 5 in der Spielposition, wobei eine Seitenwand und die Rückwand des Rahmens nicht dargestellt sind, um die Ausbildung und Wirkung der Liftplatte zu verdeutlichen,
Fig. 7 in perspektivischer Ansicht das Liftelement,
Fig. 8 in perspektivischer Ansicht die Liftplatte,
Fig. 9 in perspektivischer Ansicht den Rahmen,
Fig. 10 in perspektivischer Ansicht den Kassettenschacht.

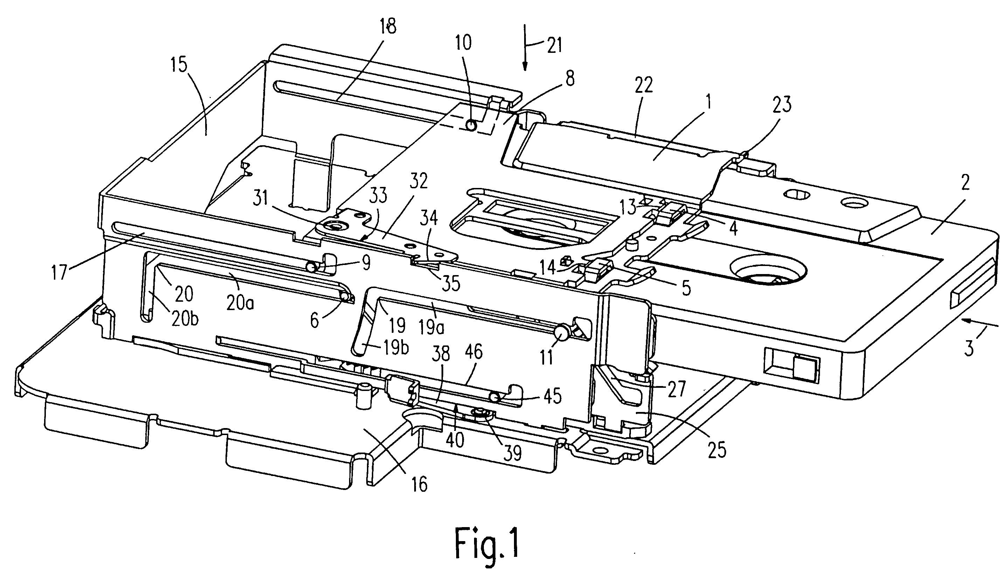

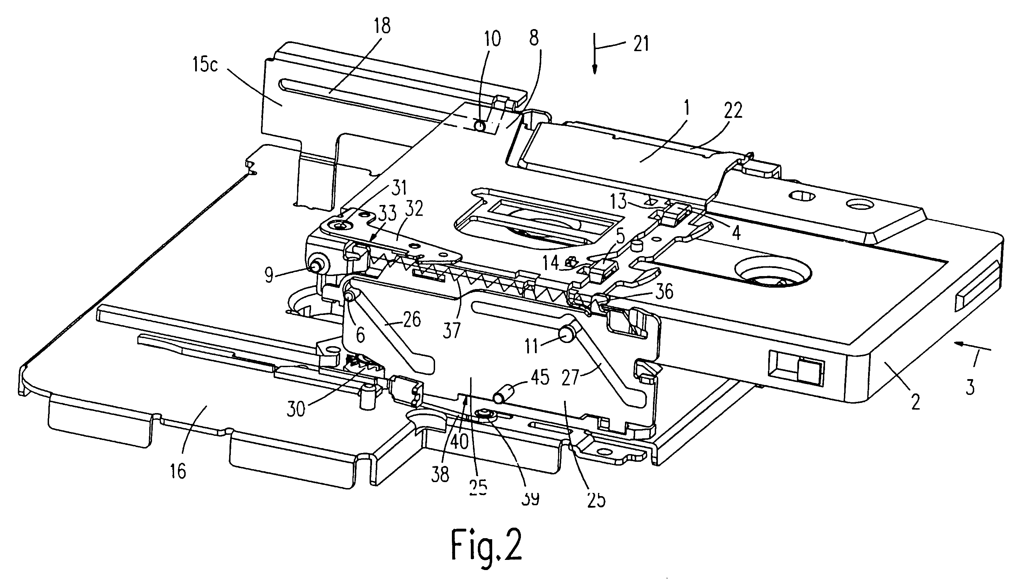

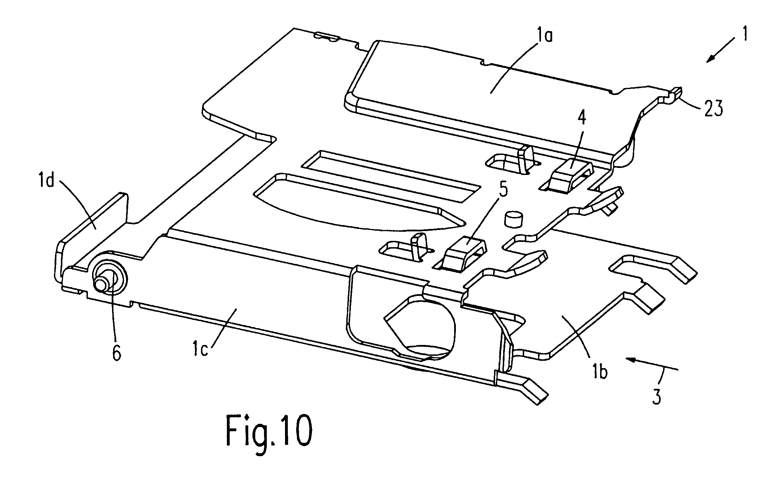

Die Figuren 1 und 2 zeigen in perspektivischer Ansicht Teile eines Lademechanismus eines Laufwerkes eines Magnetbandkassettengerätes in einer Auswurfposition, in der eine Magnetbandkassette 2 von der Hand einer Bedienperson entnommen werden kann. Der Lademechanismus weist einen Kassettenschacht 1 auf, in den die Magnetbandkassette 2 in einer horizontalen Laderichtung 3 eingeschoben worden ist. Der Kassettenschacht 1 ist in perspektivischer Ansicht als Einzelelement in der Fig. 10 dargestellt. Er weist auf Abstand eine Oberplatte 1a, eine Unterplatte 1b, eine sich in der horizontalen Laderichtung 3 erstreckende Seitenwand 1c sowie eine rückwärtige Anschlagkante 1d auf, gegen die die Magnetbandkassette 2 beim Einschieben von Hand schiebbar ist. Der Kassettenschacht 1 weist an der Oberplatte 1a zwei U-förmig ausgebildete Scharnieröffnungen 4 und 5 auf sowie an der Seitenwand 1c einen ersten Zapfen 6.

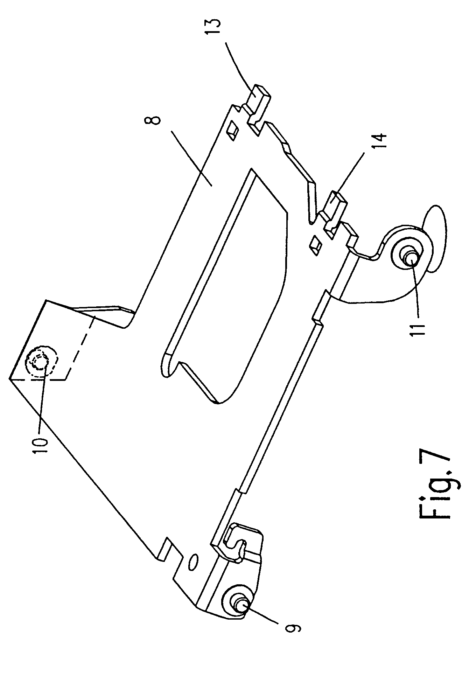

Es ist ein Liftelement 8 vorgesehen, das in Fig. 7 in perspektivischer Ansicht als Einzelelement dargestellt ist. Dieses Liftelement 8 weist einen ersten Zapfen 9, gegenüberliegend einen zweiten Zapfen 10, einen dritten Zapfen 11 sowie zwei Liftansätze 13 und 14 auf. Diese Liftansätze 13 und 14 greifen in die Scharnieröffnun gen 4 und 5 des Kassettenschachtes 1 ein.

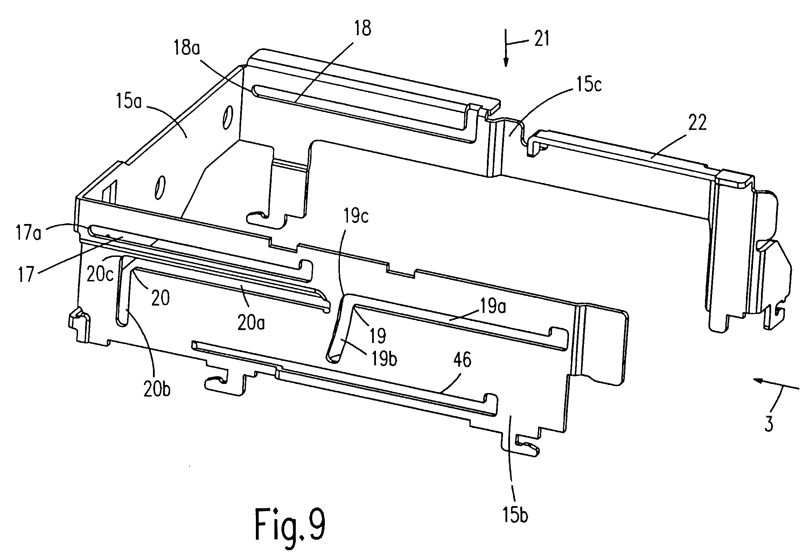

Es ist ein in Fig. 9 als Einzelelement dargestellter U-förmig ausgebildeter Rahmen 15 vorgesehen, der eine Rückwand 15a sowie zwei Seitenwände 15b und 15c aufweist. In der Seitenwand 15b des Rahmens 15 befindet sich ein erster, sich in der horizontalen Laderichtung 3 erstreckender Führungsschlitz 17, in der Seitenwand 15c ein zweiter, sich in der horizontalen Laderichtung 3 erstreckender Führungsschlitz 18. Die Seitenwand 15b des Rahmens 15 weist einen dritten Führungsschlitz 19 auf, der im wesentlichen L-förmig ausgebildet ist und einen sich in der horizontalen Laderichtung 3 erstreckenden horizontalen Teil 19a und einen sich im wesentlichen in einer vertikalen Laderichtung 21 erstreckenden vertikalen Teil 19b aufweist, wobei der vertikale Teil 19b kurvenförmig ausgebildet ist. In der Seitenwand 15b des Rahmens 15 befindet sich ein vierter Führungsschlitz 20, der im wesentlichen L-förmig ausgebildet ist und einen sich in der horizontalen Laderichtung 3 erstreckenden horizontalen Teil 20a und einen sich in der vertikalen Laderichtung 21 erstreckenden vertikalen Teil 20b aufweist.

Wie in den Fig 1 und 2 erkennbar, ist der Rahmen 15 an einer Chassisplatte 16 des Magnetbandkassettengerätes angeordnet. Der erste Zapfen 9 des Liftelementes 8 greift in den ersten Führungsschlitz 17 des Rahmens 15 ein, der zweite Zapfen 10 des Liftelementes 8 greift in den zweiten Führungsschlitz 18 des Rahmens 15 ein, und der dritte Zapfen 11 des Liftelementes 8 greift in den dritten Führungsschlitz 19 des Rahmens 15 ein. In den vierten Führungsschlitz 20 des Rahmens 15 greift der erste Zapfen 6 des Kassettenschachtes 1 ein. Die Seitenwand 15c des Rahmens 15 weist eine Auflagefläche 22 auf, auf der ein Ansatz 23 des Kassettenschachtes 1 in der horizontalen Laderichtung 3 entlanggleiten kann.

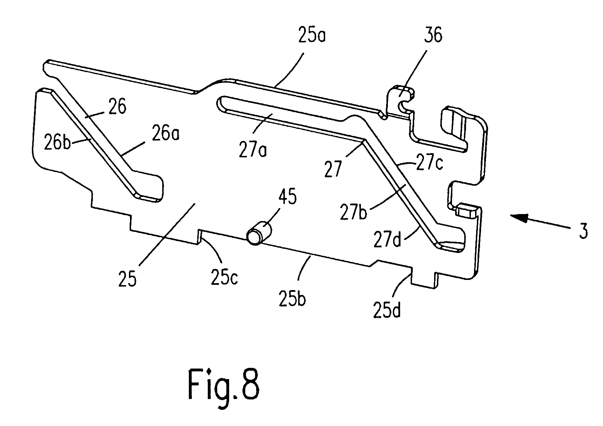

Es ist eine in Fig. 8 als Einzelelement dargestellte Liftplatte 25 vorgesehen, die einen ersten, zu der horizontalen Laderichtung 3 geneigt verlaufenden Schlitz 26 und einen zweiten Schlitz 27 aufweist. Der zweite Schlitz 27 der Liftplatte 25 weist einen sich in der horizontalen Laderichtung 3 erstreckenden horizontalen Teil 27a und einen geneigt zu der horizontalen Laderichtung 3 verlaufenden Teil 27b auf.

Wie in der Fig. 2 erkennbar, greift in den Schlitz 26 der Liftplatte 25 der erste Zapfen 6 des Kassettenschachtes 1 ein, und in den zweiten Schlitz 27 greift der dritte Zapfen 11 des Liftelementes 8 ein. Die Liftplatte 25 weist, wie in Fig 1 erkennbar, einen Führungsstift 45 auf, der in einer in der horizontalen Laderichtung 3 verlaufenden sechsten Führungsöffnung 46 des Rahmens 15 geführt ist. Die Liftplatte 25 weist eine Oberseite 25a und eine Unterseite 25b auf. Die Unterseite 25b der Liftplatte 25 ist in der horizontalen Laderichtung 3 verschiebbar auf der Chassisplatte 16 angelagert. Die Liftplatte 25 kann von einer Zahnstange 30, welche verschieblich auf der Chassisplatte 16 angelagert und von einem nicht dargestellten Servomotor in der horizontalen Laderichtung 3 antreibbar ist, in der horizontalen Laderichtung 3 hin- und zurückgefahren werden. Wird die Liftplatte 25 von der Zahnstange 30 in der horizontalen Laderichtung 3 bewegt, so drückt die Zahnstange 30 gegen eine Kante 25c der Liftplatte 25, wird die Liftplatte 25 von der Zahnstange 30 entgegen der horizontalen Laderichtung 3 bewegt, so drückt die Zahnstange 30 gegen eine Kante 25d der Liftplatte 25.

An dem Liftelement 8 ist um eine Drehachse 31 ein Blockierungshebel 32 drehbar angeordnet, der in Richtung eines Pfeiles 33 federbelastet ist. Dieser Blockierungshebel 32 verriegelt das Liftelement 8 und den Kassettenschacht 1 mit dem Rahmen 15, solange die Magnetbandkassette 2 nicht auf den Blockierungshebel 32 einwirkt. Hierzu greift ein Ansatz 34 des Blockierungshebels 32 infolge der Federbelastung in eine Verriegelungsöffnung 35 des Rahmens 15 ein. Wird die Magnetbandkassette 2 nun von der Hand einer Bedienperson gegen die rückwärtige Anschlagkante 1d des Kassettenschachtes 1 gedrückt, so wirkt die Magnetbandkassette 2 derart auf den Blockierungshebel 32 ein, daß dieser sich entgegen der Richtung des Pfeiles 33 verschwenkt und dadurch die Verriegelung zwischen Kassettenschacht 1 und dem Liftelement 8 mit dem Rahmen 15 aufhebt. Dadurch wird erreicht, daß der Lademechanismus erst dann betätigt werden kann, wenn die Magnetbandkassette 2 vollständig in den Kassettenschacht 1 von der Hand einer Bedienperson eingebracht worden ist.

Die Liftplatte 25 weist einen Liftplattenhaken 36 auf, der mittels einer schematisch dargestellten Liftfeder 37 mit dem ersten Zapfen 9 des Liftelementes 8 verspannt ist. An der Chassisplatte 16 ist ein in Richtung eines Pfeiles 40 federbelasteter Verriegelungshebel 38 drehbar um eine Drehachse 39 angelagert.

In Fig. 1 ist der Lademechanismus in der Auswurfposition mit dem vollständigen Rahmen 15 dargestellt, in der Fig. 2 sind die Rückwand 15a sowie die Seitenwand 15b des Rahmens 15 nicht dargestellt, um die Funktionsweise der Liftplatte 25 zu verdeutlichen. In der in den Fig. 1 und 2 gezeigten Auswurfposition ist die Magnetbandkassette 2 so weit in den Kassettenschacht 1 eingeschoben, daß diese gegen die rückwärtige Anschlagkante 1d des Kassettenschachtes 1 drückt und dadurch die Blockierung mittels des Blockierungshebels 32 zwischen Kassettenschacht 1 und dem Liftelement 8 mit dem Rahmen 15 aufgehoben ist. Wird die Magnetbandkassette 2 von dieser Auswurfposition von der Hand einer Bedienperson weiter in der horizontalen Laderichtung eingeschoben, so sind zwei Betriebsfälle zu unterscheiden:

Ist das Magnetbandkassettengerät nicht eingeschaltet, so ist es, um Beschädigungen des Gerätes zu vermeiden, nicht erwünscht, daß die Magnetbandkassette 2 über die Auswurfposition hinaus von der Hand einer Bedienperson in das Magnetbandkassettengerät eingebracht werden kann. Dies wird mittels des Verriegelungshebels 38 gewährleistet. Wird die Magnetbandkassette 2 bei nicht eingeschaltetem Magnetbandkassettengerät über die Auswurfposition hinaus in der horizontalen Laderichtung 3 in das Magnetbandkassettengerät gedrückt, so wird die Liftplatte 25 von dem Verriegelungshebel 38 auf nicht näher dargestellte Weise in der horizontalen Laderichtung 3 blockiert. Wird die Magnetbandkassette 2 nun weiter von der Hand der Bedienperson in der horizontalen Laderichtung 3 eingeschoben, so werden auch der Kassettenschacht 1 sowie das Liftelement 8 in der horizontalen Laderichtung 3 bewegt. Dadurch wird die Liftfeder 37 zwischen der sich nicht bewegenden Liftplatte 25 und dem sich in der horizontalen Laderichtung 3 bewegenden Liftelement 8 gespannt. Dadurch erfahren der Kassettenschacht 1, das Liftelement 8 und die Magnetbandkassette 2 eine Kraft entgegen der horizontalen Laderichtung 3, und sie werden infolge der Federkraft der Liftfeder 37 immer wieder in die Auswurfposition bewegt, wenn von der Hand der Bedienperson keine Kraft mehr auf die Magnetbandkassette 2 ausgeübt wird.

Wird die Magnetbandkassette 2 bei eingeschaltetem Magnetbandkassettengerät über die Auswurfposition hinaus in der horizontalen Laderichtung 3 von der Hand einer Bedienperson in das Magnetbandkassettengerät eingedrückt, so wird nach einem festgelegten Verschiebeweg, der z.B. in der Größenordnung von ca. 4 mm liegen kann, ein nicht dargestellter Schalter betätigt. Durch das Betätigen dieses nicht dargestellten Schalters wird ein nicht dargestellter Servomotor eingeschaltet, der über nicht dargestellte Getriebekette auf die Zahnstange 30 einwirkt und diese in der horizontalen Laderichtung 3 bewegt. Die sich in der horizontalen Laderichtung 3 bewegende Zahnstange 30 wirkt auf den Verriegelungshebel 38 derart ein, daß dieser sich entgegen der Richtung des Pfeiles 40 dreht und die Liftplatte 25 für eine Bewegung in der horizontalen Laderichtung 3 freigibt.

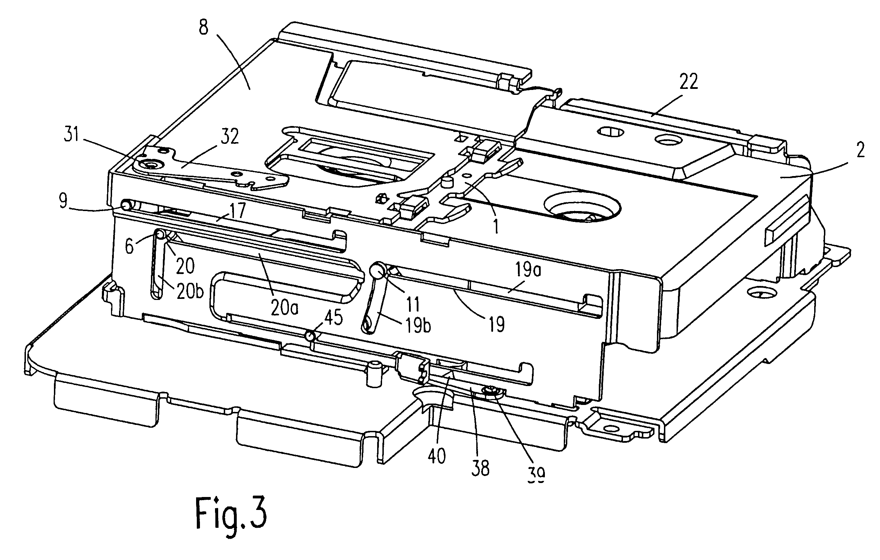

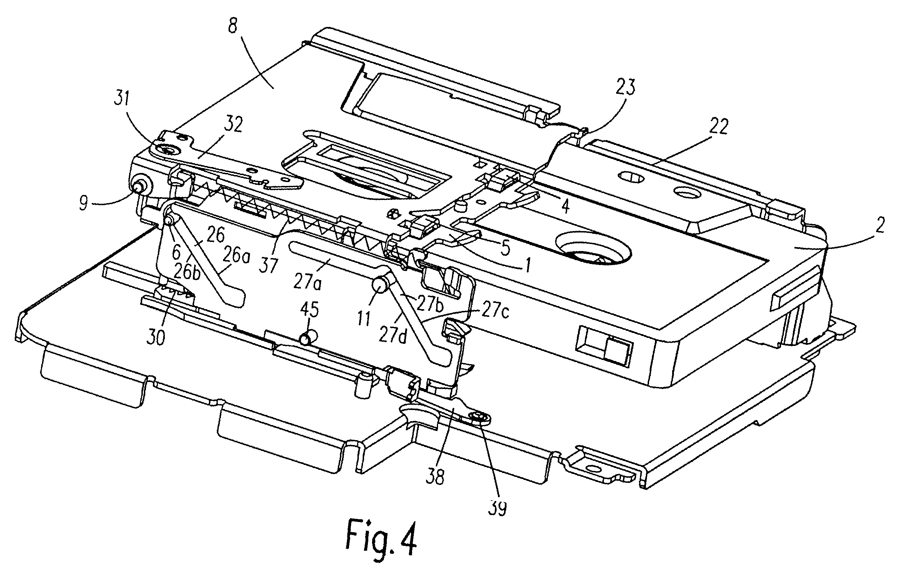

Der Lademechanismus wird zunächst in eine Zwischenposition überführt, die in den Fig. 3 und 4 in perspektivischer Ansicht dargestellt ist. In Fig. 3 ist der Lademechanismus in der Zwischenposition mit dem vollständigen Rahmen 15 dargestellt, in der Fig. 4 sind die Rückwand 15a sowie die Seitenwand 15b des Rahmens 15 nicht dargestellt, um die Funktionsweise der Liftplatte 25 zu verdeutlichen.
Die Zahnstange 30 bewegt sich beim Übergang zwischen der Auswurfposition in die Zwischenposition in der horizontalen Laderichtung 3, drückt dabei gegen die Kante 25c der Liftplatte 25 und nimmt diese Liftplatte 25 dadurch von der Auswurfposition in die Zwischenposition mit. Die von der Zahnstange 30 in der horizontalen Laderichtung mitgenommene Liftplatte 25 drückt dabei mit der Kante 26a des ersten Schlitzes 26 in der horizontalen Laderichtung 3 gegen den ersten Zapfen 6 des Kassettenschachtes 1 und mit der Kante 27c des zweiten Schlitzes gegen den dritten Zapfen 11 des Liftelementes 8. Der erste Zapfen 6 des Kassettenschachtes 1 kann dabei nicht in dem geneigt verlaufenden ersten Schlitz 26 der Liftplatte 25 hinuntergleiten, weil er von dem horizontalen Teil 20a des vierten Führungsschlitzes 20 des Rahmens 15 geführt wird. Der dritte Zapfen 11 des Liftelementes 8 kann nicht den geneigt verlaufenden Teil 27b des zweiten Schlitzes 27 der Liftplatte 25 hinuntergleiten, weil er gleichzeitig von dem horizontalen Teil 19a des dritten Führungsschlitzes 19 des Rahmens 15 geführt wird. Der erste Zapfen 9 des Liftelementes 8 gleitet beim Übergang von der Auswurfposition in die Zwischenposition in dem sich in der horizontalen Laderichtung 3 erstreckenden ersten Führungsschlitz 17 des Rahmens 15 entlang, der zweite Zapfen 10 des Liftelementes 8 in dem zweiten Führungsschlitz 18 des Rahmens 15. Zusätzlich liegt bei dem Übergang des Lademechanismus von der Auswurfposition in die Zwischenposition der Ansatz 23 des Kassettenschachtes 1 auf der Auflagefläche 22 des Rahmens 15 auf.

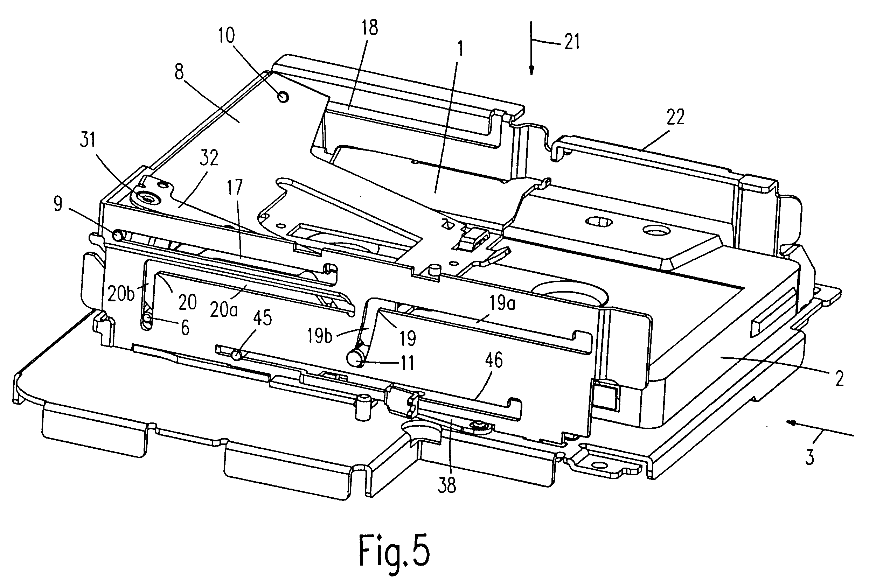

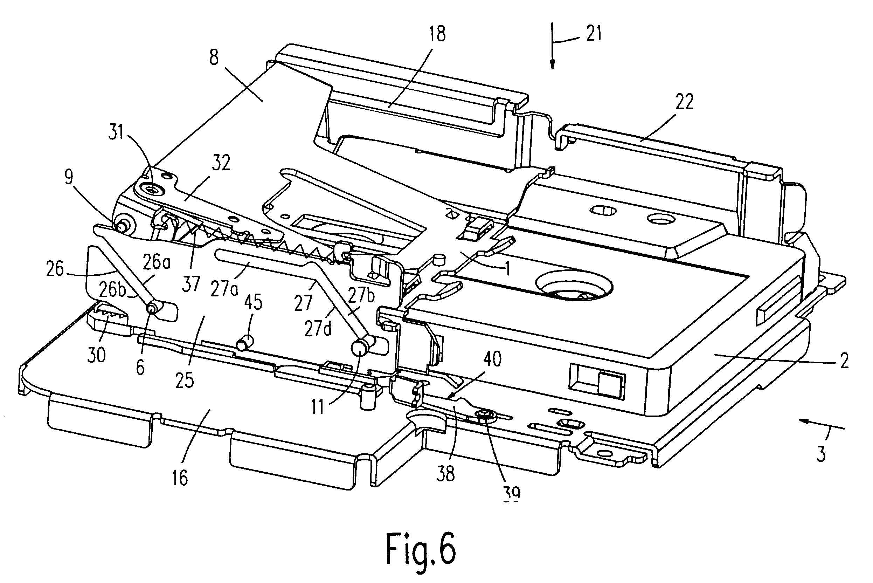

Somit werden Zahnstange 30, Liftplatte 25, das Liftelement 8 und der Kassettenschacht 1 mit der Magnetbandkassette 2 in der horizontalen Laderichtung von der Auswurfposition in die in den Fig. 3 und 4 in perspektivischer Ansicht dargestellte Zwischenposition überführt. In der Zwischenposition wird die Bewegung in der horizontalen Laderichtung 3 von Liftelement 8 und Kassettenschacht 1 dadurch beendet, daß der erste Zapfen 6 des Kassettenschachtes 1 im Bereich 20c des vierten Führungsschlitzes 20 gegen den Rahmen 15 drückt und der dritte Zapfen 11 des Liftelementes 8 im Bereich 19c des dritten Führungsschlitzes 19 gegen den Rahmen 20 drückt. Außerdem drücken der erste Zapfen 9 und der zweite Zapfen 10 des Liftelementes 8 gegen die Endbereiche 17a bzw. 18a des ersten Führungsschlitzes 17 bzw. des zweiten Führungsschlitzes 18.
Nachfolgend wird der Lademechanismus von der Zwischenposition in eine Spielposition überführt, die in perspektivischer Ansicht in den Fig. 5 und 6 dargestellt ist. In der Fig. 5 ist der gesamte Rahmen 15 dargestellt, in Fig. 6 ist die Seitenwand 15b sowie die Rückwand 15a des Rahmens 15 nicht dargestellt, um die Funktionsweise der Liftplatte 25 zu verdeutlichen.

Um den Lademechanismus von der Zwischenposition in die Spielposition zu überführen, werden die Zahnstange 30 und damit die Liftplatte 25, angetrieben mittels der nicht dargestellten Getriebekette und des nicht dargestellten Servomotors, weiter in der horizontalen Laderichtung 3 bewegt. Dabei übt die Kante 26a des Schlitzes 26 der Liftplatte 25 eine Kraft in der vertikalen Laderichtung 21 auf den ersten Zapfen 6 des Kassettenschachtes 1 aus, infolge derer der erste Zapfen 6 des Kassettenschachtes 1 in dem ersten Schlitz 26 der Liftplatte 25 in der vertikalen Laderichtung 21 herabgleitet, wobei der erste Zapfen 6 des Kassettenschachtes 1 gleichzeitig in dem vertikalen Teil 20b des vierten Führungsschlitzes 20 des Rahmens 15 geführt wird. Durch die Führung des ersten Zapfens 6 des Kassettenschachtes 1 in dem vertikalen Teil 20b des vierten Führungsschlitzes 20 wird gewährleistet, daß der Kassettenschacht 1 und damit die Magnetbandkassette 2 beim Übergang von der Zwischenposition in die Spielposition nur eine Bewegung in der vertikalen Laderichtung 21 ausführt und somit die Wickelöffnungen 41 und 42 der Magnetbandkassette 2 in der vertikalen Laderichtung 21 auf die nicht dargestellten Wickelteller des Magnetbandkassettengerätes abgesenkt werden. Dies gewährleistet ein funktionssicheres In-Eingriff-Bringen der Wickelteller mit den Wickelöffnungen 41 und 42 der Magnetbandkassette 2.

Das Liftelement 8 führt beim Übergang zwischen der Zwischenposition in die Spielposition eine reine Drehbewegung um den ersten Zapfen 9 und der zweiten Zapfen 10 des Liftelementes 8 aus. Dabei übt die Kante 27c des zweiten Schlitzes 27 der Liftplatte 25 eine Kraft in der vertikalen Laderichtung 21 auf den dritten Zapfen 11 des Liftelementes 8 aus, infolge derer der dritte Zapfen 11 des Liftelementes 8 in dem geneigt verlaufenden Abschnitt 27b des zweiten Schlitzes 27 der Liftplatte 25 hinuntergleitet. Dabei wird der dritte Zapfen 11 des Liftelementes 8 gleichzeitig in dem kurvenförmig verlaufenden vertikalen Teil 19b des dritten Führungsschlitzes 19 des Rahmens 15 geführt. In der Spielposition ist die Magnetbandkassette 2 mit ihren Wickelöffnungen 41 und 42 mit den nicht dargestellten Wickeltellern des Magnetbandkassettengerätes in Eingriff, und das Magnetband der Magnetbandkassette kann z.B. zum Wiedergabebetrieb an einem nicht dargestellten Magnetkopf vorbeigeführt werden.

Um die Magnetbandkassette 2 von der Spielposition wieder zurück in die Auswurfposition zu überführen, läuft der oben beschriebene Vorgang in umgekehrter Weise ab, Beim Übergang von der Spielposition in die Zwischenposition wird die Liftplatte 25 entgegen der horizontalen Laderichtung 3 bewegt, wodurch das erste Liftelement 8 mittels einer Drehbewegung um den ersten Zapfen 9 bzw. den zweiten Zapfen 10 von der Spielposition in die Zwischenposition gedreht wird und wodurch der Kassettenschacht 1 entgegen der vertikalen Laderichtung 21 von der Spielposition in die Zwischenposition angehoben wird. Beim Übergang von der Zwischenposition in die Auswurfposition wird die Liftplatte 25, angetrieben von der gegen die Kante 25d der Liftplatte 25 drückenden Zahnstange 30, der nicht dargestellten Getriebekette und dem nicht dargestellten Servomotor entgegen der horizontalen Laderichtung transportiert. Dabei wirkt die Liftplatte 25 derart auf den Kassettenschacht 1 und das Liftelement 8 ein, daß diese sich zusammen mit der Magnetbandkassette 2 ebenfalls entgegen der horizontalen Laderichtung 3 von der Zwischenposition in die Auswurfposition bewegen.

Die von dem Servomotor mittels der nicht dargestellten Getriebekette und der Zahnstange 30 für den Antrieb der Liftplatte 25 aufzubringenden Kräfte sind beim Übergang von der Spielposition in die Zwischenposition besonders hoch, da die Magnetbandkassette 2 entgegen ihrer Schwerkraft von der Spielposition in die Zwischenposition angehoben werden muß.

## Patentansprüche

1. Lademechanismus an einem Laufwerk für ein Magnetbandkassettengerät zum Überführen einer Magnetbandkassette (2) von einer Auswurfposition des Lademechanismus in eine Spielposition des Lademechanismus mit einem die Magnetbandkassette (2) aufnehmenden Kassettenschacht (1) und einer Liftplatte (25), mittels derer der Kassettenschacht (1) zwischen einer Zwischenposition des Lademechanismus und der Spielposition des Lademechanismus im wesentlichen in einer vertikalen Laderichtung transportierbar ist, wobei die Liftplatte (25) und der Kassettenschacht (1) in einer horizontalen Laderichtung (3) von der Auswurfposition in die Zwischenposition transportierbar sind,
**dadurch gekennzeichnet,**
**daß** ein Liftelement (8) vorgesehen ist, das drehbar und in der horizontalen Laderichtung (3) verschiebbar an einem an einer Chassisplatte (16) angeordneten Rahmen (15) gelagert ist,
**daß** das Liftelement (8) an wenigstens einem Kopplungspunkt (4, 5) drehbar mit dem Kassettenschacht (1) gekoppelt ist,
**daß** der Kassettenschacht (1), das Liftelement (8) und die Liftplatte (25) in der horizontalen Laderichtung (3) von der Zwischenposition in die Auswurfposition und umgekehrt transportierbar sind,
**daß** beim Übergang des Lademechanismus von der Zwischenposition in die Spielposition und von der Spielposition in die Zwischenposition die Liftplatte (25) in der horizontalen Laderichtung (3) bewegt wird und dabei eine Kraft auf den Kassettenschacht (1) und das Liftelement (8) ausübt, so daß der Kassettenschacht (1) im wesentlichen in der vertikalen Laderichtung (21) von der Zwischenposition in die Spielposition bzw. von der Spielposition in die Zwischenposition überführt wird, wobei bei diesem Überführen das Liftelement (8) eine Drehbewegung ausführt.

2. Lademechanismus nach Anspruch 1,
**dadurch gekennzeichnet,**
**daß** das Liftelement (8) einen ersten (9) und einen zweiten (10) Zapfen aufweist, der jeweils in einem ersten (17) bzw. zweiten (18) sich in der horizontalen Laderichtung (3) erstreckenden Führungsschlitz des Rahmens geführt wird.

3. Lademechanismus nach Anspruch 1 oder 2,
**dadurch gekennzeichnet,**
**daß** das Liftelement (8) einen dritten Zapfen (11) aufweist, der in einem dritten Führungsschlitz (19) des Rahmens (15) geführt wird, wobei der dritte Führungsschlitz (19) im wesentlichen L-förmig ausgebildet ist und einen sich in der horizontalen Laderichtung erstreckenden horizontalen Teil (19a) und einen sich im wesentlichen in der vertikalen Laderichtung erstreckenden vertikalen Teil (19b) aufweist, wobei der vertikale Teil (19b) kurvenförmig ausgebildet ist.

4. Lademechanismus nach Anspruch 1, 2 oder 3,
**dadurch gekennzeichnet,**
**daß** der Kassettenschacht (1) einen ersten Zapfen (6) aufweist, der in einem vierten Führungsschlitz (20) des Rahmens geführt wird, wobei der vierte Führungsschlitz (20) im wesentlichen L-förmig ausgebildet ist und einen sich in der horizontalen Laderichtung erstreckenden horizontalen Teil (20a) und einen sich in der vertikalen Laderichtung erstreckenden vertikalen Teil (20b) aufweist.

5. Lademechanismus nach einem der Ansprüche 1 bis 4,
**dadurch gekennzeichnet,**
**daß** die Liftplatte (25) einen ersten (26) und einen zweiten (27) geneigt verlaufenden Schlitz aufweist, wobei der erste Zapfen (6) des Kassettenschachtes (1) in den ersten Schlitz (26) und der dritte Zapfen (11) des Liftelementes (8) in den zweiten Schlitz (27) eingreift.

6. Lademechanismus nach einem der Ansprüche 1 bis 5,
**dadurch gekennzeichnet,**
**daß** der Rahmen (15) eine sich in der horizontalen Laderichtung (3) erstreckende Auflagefläche (22) aufweist, auf der ein Ansatz (23) des Kassettenschachtes (1) führbar ist.

7. Lademechanismus nach Anspruch 6,
**dadurch gekennzeichnet,**
**daß** der zweite Schlitz (27) der Liftplatte (25) kurvenförmig ausgebildet ist, wobei der Winkel zwischen der Tangente an diesen kurvenförmig ausgebildeten zweiten Schlitz (27) und der vertikalen Laderichtung (21) in Richtung auf die Oberkante (25a) der Liftplatte (25) zunimmt.

8. Lademechanismus nach Anspruch 7,
**dadurch gekennzeichnet,**
**daß** der erste Schlitz (26) der Liftplatte (25) kurvenförmig ausgebildet ist, wobei der Winkel zwischen der Tangente an diesen kurvenförmig ausgebildeten ersten Schlitz (26) und der vertikalen Laderichtung (21) in Richtung auf die Oberkante (25a) der Liftplatte (25) zunimmt.

9. Lademechanismus nach einem der Ansprüche 1 bis 8,
**dadurch gekennzeichnet,**
**daß** das Liftelement (8) und die Liftplatte (25) mittels einer Feder (37) gegeneinander verspannt sind.

10. Lademechanismus nach einem der Ansprüche 1 bis 9,
**dadurch gekennzeichnet,**
**daß** das Liftelement (8) an wenigstens zwei Kopplungspunkten (4, 5) drehbar mit dem Kassettenschacht (1) gekoppelt ist.

11. Laufwerk mit einem Lademechanismus nach einem der Ansprüche 1 bis 10.

12. Magnetbandkassettengerät mit einem Laufwerk nach einem der Ansprüche 1 bis 10.

13. Digitales Magnetbandkassettengerät mit einem Laufwerk nach einem der Ansprüche 1 bis 10.

14. Gerät zum Lesen von digital auf Platten oder anderen Informationsträgern gespeicherten Informationen mit einem Lademechanismus nach einem der Ansprüche 1 bis 10.

## Claims

1. A loading mechanism in a tape deck of a magnetic-tape-cassette apparatus, for moving a magnetic-tape cassette (2) from an eject position of the loading mechanism into a play position of the loading mechanism, having a cassette holder (1) for holding the magnetic-tape cassette (2) and a lift plate (25), by means of which the cassette holder (1) is movable between an intermediate position of the loading mechanism and the play position of the loading mechanism substantially in a vertical loading direction, the lift plate (25) and the cassette holder (1) being movable from the eject position into the intermediate position in a horizontal loading direction (3),
**characterized in that**
there is provided a lift element (8), which is arranged on a frame (15) so as to be rotatable and so as to be movable in the horizontal loading direction (3), which frame is mounted on a deck plate (16),
the lift element (8) is rotatably coupled to the cassette holder (1) in at least one coupling point (4, 5),
the cassette holder (1), the lift element (8) and the lift plate (25) are movable from the intermediate position into the eject position and vice versa in the horizontal loading direction (3),
during the movement of the loading mechanism from the intermediate position into the play position and from the play position into the intermediate position the lift plate (25) is moved in the horizontal loading direction (3) and exerts a force on the cassette holder (1) and the lift element (8) in such a manner that the cassette holder (1) is moved from the intermediate position into the play position and from the play position into the intermediate position substantially in the vertical loading direction (21), during which movement the lift element (8) performs a rotary movement.

2. A loading mechanism as claimed in Claim 1,
**characterized in that**
the lift element (8) has a first (9) and a second (10) pin, which are respectively guided in a first (17) and a second (18) guide slot of the frame, which slots extend in the horizontal loading direction (3).

3. A loading mechanism as claimed in Claim 1 or 2,
**characterized in that**
the lift element (8) has a third pin (11), which is guided in a third guide slot (19) of the frame (15), the third guide slot (19) being substantially L-shaped and having a horizontal portion (19a), which extends in the horizontal loading direction, and a vertical portion (19b), which extends substantially in the vertical loading direction, the vertical portion (19b) having a curved shape.

4. A loading mechanism as claimed in Claim 1, 2 or 3,
**characterized in that**
the cassette holder (1) has a first pin (6), which is guided a fourth guide slot (20) in the frame, the fourth guide slot (20) being substantially L-shaped and having a horizontal portion (20a), which extends in the horizontal loading direction, and a vertical portion (20b), which extends in the vertical loading direction.

5. A loading mechanism as claimed in any one of the Claims 1 to 4,
**characterized in that**
the lift plate (25) has a first (26) and a second (27) inclined slot, the first pin (6) of the cassette holder (1) engaging the first slot (26) and the third pin (11) of the lift element (8) engaging the second slot (27).

6. A loading mechanism as claimed in any one of the Claim 1 to 5,
**characterized in that**
the frame (15) has a contact surface (22) which extends in the horizontal loading direction (3) and on which a projection (23) of the cassette holder (1) can be guided.

7. A loading mechanism as claimed in Claim 6,
**characterized in that**
the second slot (27) of the lift plate (25) is curve-shaped, the angle between the tangent line to this curved second slot (27) and the vertical loading direction (21) increasing in a direction towards the upper surface (25a) of the lift plate (25).

8. A loading mechanism as claimed in Claim 7,
**characterized in that**
the first slot (26) of the lift plate (25) is curve-shaped, the angle between the tangent line to this curved first slot (26) and the vertical loading direction (21) increasing in a direction towards the upper surface (25a) of the lift plate (25).

9. A loading mechanism as claimed in any one of the Claims 1 to 8,
**characterized in that**
the lift element (8) and the lift plate (25) are restrained relative to one another by means of a spring (37).

10. A loading mechanism as claimed in any one of the Claims 1 to 9,
**characterized in that**
the lift element (8) is rotatably coupled to the cassette holder in at least two coupling points (4, 5).

11. A tape deck including a loading mechanism as claimed in any one of the Claims 1 to 10.

12. A magnetic-tape-cassette apparatus including a loading mechanism as claimed in any one of the Claims 1 to 10.

13. A digital magnetic-tape-cassette apparatus including a loading mechanism as claimed in any one of the Claims 1 to 10.

14. An apparatus for reading information stored digitally on discs or other information carriers, including a loading mechanism as claimed in any one of the Claims 1 to 10.

## Revendications

1. Mécanisme de chargement sur un mécanisme d'entraînement pour un magnétophone à cassette en vue de transporter une cassette à bande magnétique (2) d'une position d'éjection du mécanisme de chargement dans une position de lecture du mécanisme de chargement avec un compartiment à cassette (1) logeant la cassette à bande magnétique (2) et une plaque de soulèvement (25) à l'aide de laquelle le compartiment à cassette (1) peut être transporté entre une position intermédiaire du mécanisme de chargement et la position de lecture du mécanisme de chargement, essentiellement dans une direction verticale de chargement, la plaque de soulèvement (25) et le compartiment à cassette (1) pourront être transportés dans une direction horizontale de chargement (3) de la position d'éjection dans la position intermédiaire,
**caractérisé en ce**
**qu'**il est prévu un élément de soulèvement (8) qui est logé à rotation et à coulissement dans la direction horizontale de chargement (3) sur un châssis (15) disposé sur une plaque de châssis (16),
**que** l'élément de soulèvement (8) est couplé à rotation sur au moins un point d'accouplement (4, 5) avec le compartiment à cassette (1),
**que** le compartiment à cassette (1), l'élément de soulèvement (8) et la plaque de soulèvement (25) sont transportables dans la direction horizontale de chargement (3) de la position intermédiaire dans la position d'éjection et inversement,
**qu'**en cas de passage du mécanisme de chargement de la position intermédiaire dans la position de lecture et de la position de lecture dans la position intermédiaire, la plaque de soulèvement (25) est déplacée dans la direction horizontale de chargement (3) et exerce en l'occurrence une force sur le compartiment à cassette (1) et l'élément de soulèvement (8) de telle sorte que le compartiment à cassette (1) soit transporté essentiellement dans la direction verticale de chargement (21) de la position intermédiaire dans la position de lecture ou de la position de lecture dans la position intermédiaire, l'élément de soulèvement (8) exerçant un mouvement de rotation lors de ce transport.

2. Mécanisme de chargement selon la revendication 1,
**caractérisé en ce**
**que** l'élément de soulèvement (8) présente un premier (9) et un deuxième (10) tourillons qui sont respectivement guidés dans une première (17) ou deuxième (18) fentes de guidage du châssis s'étendant dans la direction horizontale de chargement (3).

3. Mécanisme de chargement selon l'une des revendications 1 ou 2,
**caractérisé en ce**
**que** l'élément de soulèvement (8) présente un troisième tourillon (11) qui est guidé dans une troisième fente de guidage (19) du châssis (15), la troisième fente de guidage (19) étant conçue essentiellement en forme de L et présentant une partie (19a) horizontale s'étendant dans la direction horizontale de chargement et une partie verticale (19b) s'étendant essentiellement dans la direction verticale de chargement, la partie verticale (19b) étant de conception incurvée.

4. Mécanisme de chargement selon l'une des revendications 1, 2 ou 3,
**caractérisé en ce**
**que** le compartiment à cassette (1) présente un premier tourillon (6) qui est guidé dans une quatrième fente de guidage (20) du châssis, la quatrième fente de guidage (20) étant conçue essentiellement en forme de L et présentant une partie horizontale (20a) s'étendant dans la direction horizontale de chargement et une partie verticale (20b) s'étendant dans la direction verticale de chargement.

5. Mécanisme de chargement selon l'une des revendications 1 à 4,
**caractérisé en ce**
**que** la plaque de soulèvement (25) présente une première (26) et une deuxième (27) fentes de conception inclinée, le premier tourillon (6) du compartiment à cassette (1) pénétrant dans la première fente (26) et le troisième tourillon (11) de l'élément de soulèvement (8) dans la deuxième fente (27).

6. Mécanisme de chargement selon l'une des revendication 1 à 5,
**caractérisé en ce**
**que** le châssis (15) présente une surface d'application (22) s'étendant dans la direction horizontale de chargement (3) sur laquelle un épaulement (23) du compartiment à cassette (1) peut être guidé.

7. Mécanisme de chargement selon la revendication 6,
**caractérisé en ce**
**que** la deuxième fente (27) de la plaque de soulèvement (25) est conçue de forme incurvée, l'angle entre la tangente sur cette deuxième fente (27) de conception incurvée et la direction verticale de chargement (21) augmentant dans la direction du bord supérieur (25a) de la plaque de soulèvement (25).

8. Mécanisme de chargement selon la revendication 7,
**caractérisé en ce**
**que** la première fente (26) de la plaque de soulèvement (25) est de conception incurvée, l'angle entre la tangente sur cette première fente (26) de conception incurvée et la direction verticale de chargement (21) augmentant dans la direction du bord supérieur (25a) de la plaque de soulèvement (25).

9. Mécanisme de chargement selon l'une des revendicatior s 1 à 8,
**caractérisé en ce**
**que** l'élément de soulèvement (8) et la plaque de soulèvement (25) sont pressés l'un contre l'autre à l'aide d'un ressort (37).

10. Mécanisme de chargement selon l'une des revendications 1 à 9,
**caractérisé en ce**
**que** l'élément de soulèvement (8) est couplé à rotation avec le compartiment à cassette (1) sur au moins deux points d'accouplement (4, 5).

11. Mécanisme d'entraînement avec un mécanisme de chargement selon l'une des revendications 1 à 10.

12. Magnétophone à cassette avec un mécanisme d'entraînement selon l'une des revendications 1 à 10.

13. Magnétophone à cassette numérique avec un mécanisme d'entraînement selon l'une des revendications 1 à 10.

14. Appareil de lecture d'informations enregistrées numériquement sur des disques ou d'autres supports d'informations avec un mécanisme de chargement selon l'une des revendications 1 à 10.
